# FASCICULE DE BREVET EUROPEEN

(11) **EP 0 906 023 B1**
(45) Date de publication et mention de la délivrance du brevet: **04.09.2002**
(21) Numéro de dépôt: 97930566.1
(22) Date de dépôt: 23.06.1997
(51) Int. Cl.: A21D 13/08, A23G 3/28, A23G 3/00

(54) **DECORS IMPRIMES POUR PATISSERIE**
GEDRUCKTE VERZIERUNGEN FÜR BACKWAREN
PRINTED DECORATIONS FOR PASTRY

(30) Priorité: 21.06.1996 FR 9607769
(43) Date de publication de la demande: 07.04.1999
(73) Titulaire: Brissonneau, Geneviève Socorro, 75016 Paris (FR)
(72) Inventeur: Brissonneau, Geneviève Socorro, 75016 Paris (FR)
(86) Numéro de dépôt international: FR9701113
(87) Numéro de publication internationale: WO97049291

(56) Documents cités:
- BE-A- 1 004 955
- FR-A- 2 640 473
- GB-A- 1 073 366
- GB-A- 2 234 422
- US-A- 3 503 345
- US-A- 4 285 978
- DATABASE WPI Section Ch, Derwent Publications Ltd., London, GB; Class D13, AN 73-21049U XP002030674 & JP 48 001 512 B (MAEDA SEIKA KK)
- DATABASE WPI Section Ch, Week 9039 Derwent Publications Ltd., London, GB; Class D11, AN 90-292859 XP002030675 & IL 79 106 A (DAVIDOR Y) , 31 août 1990

## Description

La présente invention concerne un procédé de fabrication de décors comestibles reproduisant tous types de dessins y compris des dessins en couleur .Ces décors sont destinés à recouvrir partiellement ou en totalité les gâteaux avec lesquels ils constituent un ensemble parfaitement homogène. Les caractéristiques recherchées, aussi bien par les professionnels que par les particuliers, d'un décor imprimé sont de plusieurs ordres : souplesse et onctuosité sont nécessaires pour permettre le tranchage du gâteau sans que le décor fasse obstacle à la découpe - le goût du décor doit être un plus gustatif et ne pas dénaturer le gâteau - le décor doit pouvoir supporter la congélation et être restitué parfaitement après décongélation - le décor doit pouvoir être vendu séparément du gâteau et supporter le transport sans risquer de dommages - le décor doit pouvoir reproduire fidèlement un dessin en couleur à des milliers d'exemplaires avec la finesse des détails - une fois posé sur le gâteau, le décor doit constituer un ensemble parfaitement homogène avec le gâteau. Aucun décor imprimé existant actuellement ne remplit toutes ces conditions. L'état actuel de la technique fait appel au papier azyme appelé également papier ostie assez désagréable au palais et à une autre couche de matière. Le brevet FR 2 640 473 A (POUGHON PHILIPPE) fait ainsi état de seulement deux pellicules. Ainsi lorsque le papier azyme est posé tel quel sur une autre couche de l'une des matières du groupe comprenant la pâte d'amande, le chocolat, la gélatine ,un biscuit, du sucre glacé ,le papier azyme garde alors une rigidité très désagréable au palais. Par ailleurs le papier ostie aura tendance à gondoler et à se replier sur lui-même.Il supportera mal la congélation.

Le brevet IL 79 106 A (DAVIDOR Y) fait également état de deux couches seulement : un « mix fondant » sur lequel est imprimé le décor et un revêtement transparent comestible. Cette opération n'est possible que parce que le mix est suffisamment fondant,c'est à dire visqueux pour que le revêtement transparent adhère à cette couche. Ce qui ne serait pas possible sur une matière de pâte d'amande ou de chocolat. La réalisation d'un décor sur un mix fondant pose des problèmes lors des manipulations ultérieures ,de la congélation et de la conservation à température ambiante.

Le brevet JP 48 001 512 B ( MAEDA SEIKA KK) fait état d'une seule couche de.papier ostie sur le côté duquel est imprimé un logo avec une encre comestible. Cette couche est posée ensuite directement sur un biscuit. Pour joindre le gâteau et cette unique couche imprimée ,il faut cuire l'ensemble Dans ce cas on voit la couleur du biscuit par transparence à travers le papier azyme. Par ailleurs ceci n'est pas possible quand il n'y a pas cuisson. Or la cuisson n'est pas possible quand les décors sont destinés à être posés sur une pâtisserie après que celle-ci ait déjà été fabriquée L'objectif de l'invention est de résoudre ces problèmes.

L'invention propose ainsi une technique qui permette de reproduire un dessin en plusieurs couleurs avec fidélité y compris sur des grandes dimensions, sans altérer le goût du gâteau.

D'une façon plus précise, l'invention consiste à réaliser un décor constitué de cinq couches successives. Les première, deuxième, et troisième couches sont indispensables pour obtenir le résultat principal recherché qui est la souplesse, l'homogénéité, la conservation et le goût. Les quatrième et cinquième couches apportent des avantages complémentaires lors de la manipulation et du conditionnement du décor. La déclinaison des couches en commençant par la partie supérieure qui est le haut du décor comporte - Une première couche de papier azyme sur laquelle est imprimé un motif avec une encre alimentaire -Une deuxième couche de matière appartenant au groupe suivant : sirop ,base aqueuse , nappage qui remplit plusieurs fonctions : elle permet un collage parfait entre la première couche et la troisième couche du décor, elle assouplit le papier azyme et de ce fait permet au papier azyme de ne faire qu'un avec la troisième couche - Une troisième couche de matière appartenant au groupe suivant : pâte d'amande, chocolat . Cette troisième couche peut être préalablement mélangée avec de l'oxyde de titane. L'oxyde de titane permet alors de blanchir cette troisième couche de sorte que les couleurs imprimées sur la couche de papier azyme restent éclatantes . Après quelques jours, l'ensemble du décor constitue un ensemble parfaitement homogène qui répond au résultat recherché. Pour donner une brillance au décor, la première couche de papier azyme peut être recouverte d'un léger nappage transparent.

Une quatrième couche strictement identique à la deuxième couche est utilisée pour faire adhérer l'ensemble du décor constitué des premières, deuxième, et troisième couches à la cinquième couche. La cinquième couche est constituée de papier azyme. De cette façon ,on évite que la troisième couche de matière appartenant au groupe suivant :pâte d'amande, chocolat , naturellement grasse et collante ne soit directement en contact avec l'emballage. Le décor peut ainsi être manipulé très facilement .Le décor peut être facilement retiré de son emballage. Le décor est conditionné dans un sachet sous vide ou sous atmosphère modifiée, l'air ambiant étant alors remplacé par un gaz appartenant au groupe suivant : CO2,azote, mélange azote etCO2.On constate que la conservation du produit est alors possible à température ambiante sans altération du produit.

Le collage des couches se fait de la façon appartenant au groupe suivant :par une pression mécanique également répartie sur toute la surface, en passant les couches dans un laminoir entre deux rouleaux. en mettant les couches sous une presse. On constate que cela permet de faire adhérer les couches entre elles .

Le décor est congelé à une température négative selon le moyen appartenant au groupe suivant : froid mécanique, cryogénie On constate que la conservation du décor est possible durant 18 mois à une température négative à -18 degrés.

L'impression du papier azyme est réalisé par sérigraphie, héliographie, tempographie, au moyen d'un aérographe ou par projection d'un jet d'encre alimentaire.

L'utilisation du jet d'encre alimentaire consiste à remplir des cartouches d'une imprimante jet d'encre traditionnelle avec une encre alimentaire

Lorsque le décor est imprimé au jet d'encre, la feuille de papier azyme doit avoir l'épaisseur maximum d'une feuille de papier normale accepté par une imprimante jet d'encre de bureau. Les cartouches d'encre sont remplies avec une encre alimentaire . Cette encre alimentaire est fabriquée à partir de colorants alimentaires sur une base aqueuse.

## Revendications

1. Décor comestible pour tous types de gâteaux secs frais ou surgelés comportant :
a) une première couche en partant du haut constituée d'une feuille de papier azyme imprimée avec une encre alimentaire
b) une deuxième couche en partant du haut d'une matière appartenant au groupe suivant : sirop , nappage. base aqueuse qui permet le collage entre la première couche du haut et la troisième couche du décor, rend le papier azyme plus souple et permet de constituer un ensemble homogène et,
c) une troisième couche en partant du haut d'un produit alimentaire constituée d'une matière appartenant au groupe suivant : pâte d'amande ,chocolat

2. Décor comestible imprimé pour tous types de gâteaux secs frais ou surgelés selon la revendication 1,2 ou 3 **caractérisé en ce que** le décor comporte une quatrième couche ,en partant du haut du décor, laquelle couche est d'une matière appartenant au groupe suivant: sirop ,nappage, base aqueuse et une cinquième couche en partant du haut de papier azyme , qui permet à la troisième couche en partant du haut d'une matière appartenant au groupe suivant : pâte d'amande ,chocolat , naturellement grasse et collante de ne pas coller à l'emballage et de faciliter la manipulation du décor

3. Décor comestible imprimé pour tous types de gâteaux secs frais ou surgelés selon l'une quelconque des revendications 1 ou 2 **caractérisé en ce que** la troisième couche en partant du haut d'une matière appartenant au groupe suivant : pâte d'amande, chocolat est mélangée avec de l'oxyde de titane, ce qui permet de blanchir la dite couche et de faire ressortir les couleurs qui sont imprimées sur le papier azyme.

4. Décor comestible imprimé pour tous types de gâteaux secs frais ou surgelés selon l'une quelconque des revendications 1, 2 , ou 3 **caractérisé en ce que** la première couche du décor en partant du haut constituée de papier azyme imprimé, est recouverte d'un léger nappage transparent qui permet de donner une brillance au décor.

5. Décor comestible imprimé pour tous types de gâteaux secs frais ou surgelés selon l'une quelconque des revendications 1, 2, 3, ou 4 **caractérisé en ce que** le décor est conditionné dans un sachet sous vide ou sous atmosphère modifiée, l'air ambiant étant alors remplacé par un gaz appartenant au groupe suivant :
CO2, azote, mélange azote etCO2permettant que la conservation du produit soit alors possible à température ambiante sans altération du produit

6. Procédé pour l'obtention d'un décor pour tous types de gâteaux secs, frais ou surgelés selon l'une quelconque des revendications 1,2,3, 4 , ou **caractérisé en ce que** le collage des couches 5 se fait de la façon appartenant au groupe suivant :par une pression mécanique également répartie sur toute la surface, en passant les couches dans un laminoir entre deux rouleaux, en mettant les couches sous une presse, ce qui permet de faire adhérer les couches entre elles.

7. Procédé pour l'obtention d'un décor pour tous types de gâteaux secs frais ou surgelés selon la revendication 6 **caractérisé en ce que** le décor est congelé à une température négative selon le moyen appartenant au groupe suivant : froid mécanique, cryogénie, ce qui permet la conservation du décor durant 18 mois à une température négative à -18 degrés.

8. Procédé pour l'obtention d'un décor pour tous types de gâteaux secs frais ou surgelés selon l'une quelconque des revendications 6 ,7, ou 8 **caractérisé en ce que** l'impression par jet d'encre consiste à imprimer d'abord la feuille de papier azyme qui doit avoir l'épaisseur maximum d'une feuille de papier accepté par une imprimante jet d'encre de bureau en remplissant les cartouches avec de l'encre alimentaire sur une base aqueuse.

## Claims

1. An edible decoration for all types of fresh or frozen dry cakes comprising:
a) a first layer, starting from the top, consisting of a sheet of edible paper, printed with an edible ink,
b) a second layer, starting from the top, made of a material belonging to the group including syrup, topping and aqueous base, which enables the first top layer and the third layer of the decoration to stick together, makes the edible paper more supple and makes it possible to form a homogeneous whole, and
c) a third layer, starting from the top, made of an edible material belonging to the group including almond paste and chocolate.

2. A printed edible decoration for all types of fresh or frozen dry cakes, according to claim 1,2 or 3 **characterized in that** the decoration comprises a fourth layer, starting from the top of the decoration, the said layer consisting of a material belonging to the group including syrup, topping and aqueous base, and a fifth layer, starting from the top, made of edible paper, which prevents the third layer, starting from the top, consisting of a material belonging to the group including almond paste and chocolate, which is naturally greasy and sticky, from sticking to the packing and facilitates the handling of the decoration.

3. A printed edible decoration for all types of fresh or frozen dry cakes, according to either one claims 1 or 2, **characterized in that** the third layer, starting from the top, consisting of a material belonging to the group including almond paste and chocolate, is mixed with titanium oxide, making it possible to whiten the said layer and bring out the colors printed on the edible paper.

4. An edible decoration for all types of fresh or frozen dry cakes, according to any one of claims 1, 2 or 3, **characterized in that** the first layer of the decoration, starting from the top, consisting of printed edible paper, is covered with a light transparent topping for brightening the decoration.

5. A printed edible decoration for all types of fresh or frozen dry cakes, according to any one of claims 1, 2, 3 or 4, **characterized in that** the decoration is packaged in a sachet under vacuum or under a modified atmosphere, in which case the ambient air is replaced with a gas belonging to the group including CO₂, nitrogen and nitrogen/CO₂ mixture, thereby enabling the product to be stored at room temperature without deteriorating.

6. A method for obtaining a decoration for all types of fresh or frozen dry cakes according to any one of claims 1, 2, 3, 4 or 5, **characterized in that** the layers are stuck together by a method belonging to the group including application of a mechanical pressure equally distributed over the whole of the surface, passage of the layers through a mill between two rollers, and placing of the layers under a press, making it possible to stick the layers to one another.

7. A method for obtaining a decoration for all types of fresh or frozen dry cakes according to claim 6, **characterized in that** the decoration is frozen at a negative temperature by a means belonging to the group including mechanical refrigeration and cryogenics, enabling the decoration to be stored for 18 months at a negative temperature of -18 degrees.

8. A method for obtaining a decoration for all types of fresh or frozen dry cakes according to either one of claims 6, 7 or 8 **characterized in that** the ink jet printing consists in initially printing the sheet of edible paper, which must have the maximum thickness of a sheet of paper accepted by an office ink jet printer, the cartridges being filled with water-based edible ink.

## Patentansprüche

1. Essbare Garnierung für alle Arten von frischem oder tiefgefrorenem Teegebäck, umfassend:
a) eine erste, von oben ausgehende, aus einem ungesäuerten Blatt mit einer Lebensmitteltinte bedrucktem Papier bestehende Schicht
b) eine zweite, von oben ausgehende, aus einem Material bestehende Schicht, das zu folgender Gruppe gehört: Sirup, Überzug, wasserhaltige Basis, die das Verkleben zwischen der ersten Schicht von oben und der dritten Schicht der Garnierung erlaubt, das ungesäuerte Papier elastischer macht und die Bildung eines homogenen Ganzen erlaubt, und
c) eine dritte, von oben ausgehende Schicht eines Lebensmittelprodukts, die aus einem folgender Gruppe angehörenden Material besteht: Marzipan, Schokolade.

2. Essbare bedruckte Garnierung für alle Arten von frischem oder tiefgefrorenem Teegebäck gemäß Anspruch 1, 2 oder 3, **dadurch gekennzeichnet, dass** die Garnierung eine vierte, von oben von der Garnierung ausgehende Schicht umfasst, welche aus einem zu folgender Gruppe gehörendem Material besteht: Sirup, Überzug, wasserhaltige Basis, und eine fünfte, von oben vom ungesäuerten Papier ausgehende Schicht, die es der dritten, von oben ausgehenden Schicht aus einem zu folgender Gruppe gehörenden Material: natürlich fettes und klebendes Marzipan, Schokolade, erlaubt, nicht an der Verpackung festzukleben und die Handhabung der Garnierung zu erleichtern.

3. Essbare bedruckte Garnierung für alle Arten von frischem oder tiefgefrorenem Teegebäck gemäß Anspruch 1 oder 2, **dadurch gekennzeichnet, dass** die dritte, von oben ausgehende Schicht aus einem zu folgender Gruppe gehörendem Material: Marzipan, Schokolade mit Titanoxid vermischt wird, was es erlaubt, die besagte Schicht zu blanchieren und die auf dem ungesäuerten Papier aufgedruckten Farben hervortreten zu lassen.

4. Essbare bedruckte Garnierung für alle Arten von frischem oder tiefgefrorenem Teegebäck gemäß Anspruch 1, 2 oder 3, **dadurch gekennzeichnet, dass** die erste, aus bedrucktem ungesäuertem Papier bestehende Schicht der Garnierung von oben mit einem leichten transparenten Überzug überzogen wird, der es erlaubt, der Garnierung Glanz zu verleihen.

5. Essbare bedruckte Garnierung für alle Arten von frischem oder tiefgefrorenem Teegebäck gemäß Anspruch 1, 2, 3 oder 4, **dadurch gekennzeichnet, dass** die Garnierung in einem luftdichten Beutel oder einem Beutel mit veränderter Atmosphäre verpackt wird, wobei die Umgebungsluft durch ein zu folgender Gruppe gehörendes Gas ersetzt wird: CO2, Stickstoff, Mischung aus Stickstoff und CO2, was es erlaubt, dass die Konservierung des Produktes bei Raumtemperatur ohne Beeinträchtigung des Produktes möglich ist.

6. Verfahren zum Erhalt einer Garnierung für alle Arten von frischem oder tiefgefrorenem Teegebäck, gemäß Anspruch 1, 2, 3, 4 oder 5, **dadurch gekennzeichnet, dass** das Verkleben der Schichten auf die zu folgender Gruppe gehörenden Weise durch gleichmäßig verteilten mechanischen Druck auf die gesamte Fläche durch Walzen der Schichten zwischen zwei Rollen erfolgt, wobei die Schichten unter eine Presse gelegt werden, was die Anhaftung der Schichten untereinander erlaubt.

7. Verfahren zum Erhalt einer Garnierung für alle Arten von frischem oder tiefgefrorenem Teegebäck gemäß Anspruch 6, **dadurch gekennzeichnet, dass** die Garnierung bei einer negativen Temperatur gemäß der zu folgender Gruppe gehörendem Mittel tiefgefroren wird: mechanische Kälte, Tiefsttemperaturtechnik, was die Konservierung der Garnierung über 18 Monate bei einer negativen Temperatur von -18°C erlaubt.

8. Verfahren zum Erhalt einer Garnierung für alle Arten von frischem oder tiefgefrorenem Teegebäck gemäß Anspruch 6, 7 oder 8, **dadurch gekennzeichnet, dass** das Bedrucken per Tintenstrahl im Bedrucken von zunächst des ungesäuerten Blattes Paper besteht, das die maximale Stärke eines vom Tintenstrahldrucker akzeptierten Blattes Büropapier haben muss, wobei die Patronen mit Lebensmitteltinte auf Wasserbasis befüllt werden.
